**Europäisches Patentamt**

(19) **European Patent Office**

**Office européen des brevets**

(11) Veröffentlichungsnummer: **0 087 139**

**B1**

(12) # EUROPÄISCHE PATENTSCHRIFT

(45) Veröffentlichungstag der Patentschrift:
17.12.86

(51) Int. Cl.⁴: **C 12 C 13/00**

(21) Anmeldenummer: 83101567.2

(22) Anmeldetag: 18.02.83

(54) **Brauereianlage.**

(30) Priorität: 19.02.82 DE 3206026

(43) Veröffentlichungstag der Anmeldung:
31.08.83 Patentblatt 83/35

(45) Bekanntmachung des Hinweises auf die Patenterteilung:
17.12.86 Patentblatt 86/51

(84) Benannte Vertragsstaaten:
AT BE CH DE FR IT LI LU NL SE

(56) Entgegenhaltungen:
DE-A-2 951 324
GB-A-2 077 759

(73) Patentinhaber: Gabriel Sedlmayr Spaten-Franziskaner- Bräu KGaA, Marsstrasse 46- 48,
D-8000 München 2 (DE)

(72) Erfinder: Beer, Georg, Dr., Marsstrasse 46- 48,
D-8000 München 2 (DE)

(74) Vertreter: Klingseisen, Franz, Dipl.- Ing., Dr. F. Zumstein sen. Dr. E. Assmann Dr. R. Koenigsberger Dr. F. Zumstein jun. Dipl.- Ing. F. Klingseisen Bräuhausstrasse 4, D-8000 München 2 (DE)

EP 0 087 139 B1

## Beschreibung

Die Erfindung betrifft eine Brauereianlage, insbesondere eine kleintechnische Anlage mit Wasseraufbereitung, Sudwerk, Gär- und Lagertanke sowie sonstigen für die Bierbereitung erforderlichen Einrichtungen.

Kleintechnische Brauereianlagen werden bisher in der gleichen Weise wie großtechnische Anlagen erstellt, wobei die einzelnen Geräte und Einrichtungen in einem Gebäude montiert und verrohrt werden. Dies ist vor allem beim Bau einer Brauereianlage in industriell weniger entwickelten Ländern zeit- und kostenaufwendig. Wenn die Produktionskapazität einer bereits erstellten Anlage vergrößert werden soll, muß die Erweiterung der Anlage in der gleichen aufwendigen Art und Weise vorgenommen werden.

Die GB-A-2 077 759 beschreibt eine Brauereianlage, deren Besonderheit darin besteht, daß von einer Verteilereinheit 14 aus verschiedene Kessel 11, 12, 13 und Pumpen unterschiedlich miteinander verbunden werden können. Die einzelnen Kessel und die Verteilereinheit sind jeweils auf einer Sockelplatte 20 montiert, die aus einem Hohlprofil 47 zusammengeschweißt ist und eine quadratische Form hat. Die einzelnen Sockelplatten 20 können zwar mit den Rändern aneinander liegend zusammengestellt werden, für die betriebsfertige Verbindung der einzelnen Anlagenteile haben diese Sockelplatten aber keine Funktion. Zwar können zur Erweiterung der Anlage zusätzliche Sockelplatten mit weiteren Kesseln dazugestellt werden, ein grundsätzlicher Unterschied zu einer üblichen Erweiterung einer Anlage durch Zuschalten von weiteren Kesseln ergibt sich aber dadurch nicht.

Der Erfindung liegt die Aufgabe zugrunde, eine zusammensetzbare Brauereianlage, insbesondere eine kleintechnische Anlage, so auszubilden, daß die Erstellung und Montage vereinfacht wird und auch eine Erweiterung der Anlage in einfacher und kostengünstiger Weise vorgenommen werden kann.

Dies wird erfindungsgemäß dadurch erreicht, daß Anlagenteile in geschlossenen jedoch begehbaren Containern fest montiert und verrohrt sind und daß die die Anlagenteile enthaltenden Container aneinander anschließbar sind.

Durch die Unterbringung von Anlagenteilen in Containern kann die gesamte Brauereianlage beim Hersteller vorgefertigt werden, so daß an dem vorgesehenen Standort der Brauerei lediglich die angelieferten Container aneinander angeschlossen zu werden brauchen, um die Brauereianlage im wesentlichen betriebsbereit zu machen. Durch die Verwendung von hinsichtlich der Abmessungen handelsüblichen Containern wird zudem der Transport der Anlage auch in entlegene Gebiete gegenüber dem bisherigen Transport der Einzelteile wesentlich vereinfacht und verbilligt. Das sich durch Unterbringung der Anlagenteile in Containern ergebende Baukastensystem ermöglicht schließlich eine einfache Erweiterung der Anlage dadurch, daß ein einzelner oder mehrere beispielsweise Gär- und Lagertanks enthaltende Container über oder neben dem bereits vorhandenen Container angeordnet und mit diesem verbunden werden. Wie bei der Aufstellung der Gesamtanlage ist auch hierbei kein geschultes Montagepersonal erforderlich, weil die betreffenden Anlagenteile bereits beim Hersteller im Container fertig montiert und verrohrt werden, so daß lediglich die einzelnen Container aneinander angeschlossen werden müssen.

Um das Anschließen der einzelnen Container aneinander zu erleichtern, werden diese mit vorgefertigten Anschlüssen für Rohrleitungen, elektrische Leitungen und dergleichen versehen.

Vorteilhafterweise werden auch Energieversorgungseinrichtungen und weitere Zubehöreinrichtungen einer Brauereianlage in Containern fest montiert, so daß auch diese Einrichtungen wie die Anlagenteile der Brauerei vorgefertigt, leicht transportiert und durch Anschließen an die anderen Container schnell mit der Brauereianlage integriert werden können.

Eine beispielsweise Ausführungsform der Erfindung wird nachfolgend anhand der Zeichnung näher erläutert. Es zeigen:

Fig. 1 in einer schematischen Draufsicht mehrere aneinander angeschlossene Container, in denen verschiedene Anlagenteile einer Brauerei montiert sind;

Fig. 2 einen Schnitt durch den Sudwerk-Container und

Fig. 3 eine Schnittdarstellung des Containers mit Gär- und Lagertanks.

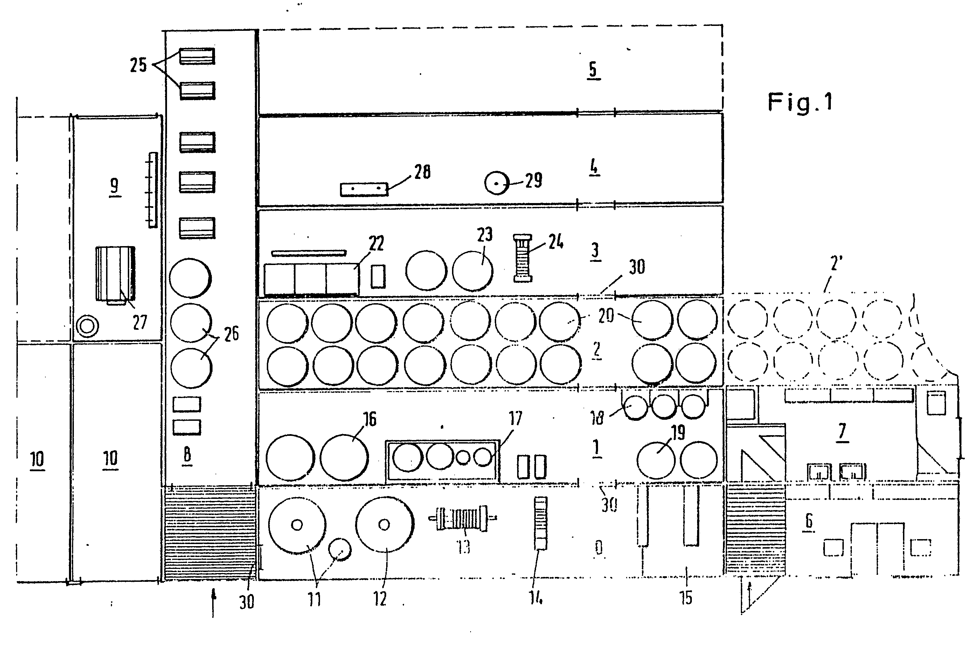

In Fig. 1 sind größere 40'-Container und kleinere 20'-Container in einer Grundrißdarstellung wiedergegeben, deren Außenabmessungen den im internationalen Transportverkehr üblichen Containern entsprechen. Die in Fig. 1 schematisch wiedergegebene Brauerei ist beispielsweise für eine Ausstoßmenge bis 10 000 hl Bier pro Jahr ausgelegt. Dies entspricht etwa 5 bis 10 hl Bier je Sud.

Bei dem dargestellten Ausführungsbeispiel ist in dem Container 0 das Sudwerk untergebracht, wobei nur einzelne Anlagenteile eines Sudwerks schematisch wiedergegeben sind. Bei 11 ist Maischbottich und Maischpfanne angedeutet. In Einsatzgebieten mit anderen Rohfruchtarten als Gerste kann bei 11 auch ein Reiskocher vorgesehen sein. Mit 12 ist eine Würzepfanne und mit 13 ein Maischefilter bezeichnet. 14 ist ein Plattenkühler für die Würze. Bei 15 ist durch eine Trennwand eine Elektro-Zelle abgeteilt, in der die elektronische Steueranlage des Sudwerks und weitere elektrische Einrichtungen untergebracht sind.

Der Container 0 wird als gesondertes Bauelement in der Weise vor-Befertigt, daß alle Anlagenteile 11 bis 15 vom Hersteller der Brauereianlage in dem Container 0 fest montiert und miteinander verrohrt bzw. elektrisch verbunden werden, so daß das Sudwerk als komplette Einheit mit Steuerungsanlage transportfähig und nach dem Aufstellen am vorgesehenen Standort der Brauerei im wesentlichen betriebsbereit ist. In der Wand des Containers werden die notwendigen Anschlüsse für die Wasserzufuhr und dergleichen vorgesehen, die im einzelnen nicht dargestellt sind.

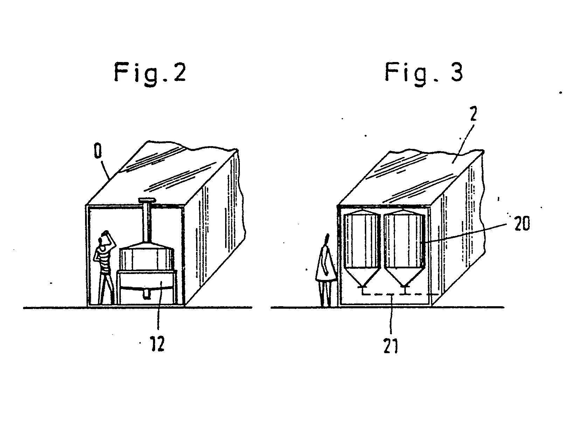

Fig. 2 zeigt eine Schnittdarstellung des Containers O mit der Würzepfanne 12, wobei zur Verdeutlichung der Größenverhältnisse eine Bedienungsperson dargestellt ist.

Neben dem Container O ist an diesem anliegend ein Container 1 angeordnet, der Behälter 16 für die Wasserreserve, eine Wasseraufbereitungseinrichtung 17, Hefebehälter 18 und Behälter 19 zum Anstellen der Hefe enthält. Auch dieser Container 1 weist die erforderlichen Anschlüsse für die Verbindung mit dem Container O auf.

Der sich an den Container 1 anschließende Container 2 enthält Gär- und Lagertanks 20, die in Fig. 3 in einer Seitenansicht wiedergegeben sind. Um das vorgegebene Volumen des Containers 2 hinsichtlich Kapazität der Anlage besser auszunützen, sind die Tanks 20 so hoch ausgelegt, daß jeder Tank zwei Sude aufnehmen kann. Bei geringerer Kapazität der Anlage ist es auch möglich, kleinere oder weniger Tanks in dem Container 2 anzuordnen. Die am unteren Ende zum Sammeln der Hefe trichterförmig ausgebildeten Tanks 20 sind über Leitungen 21 miteinander verbunden, wie sie in Fig. 3 durch eine gestrichelte Linie angedeutet sind. Diese Leitungen münden in Anschlüssen an der Seitenwand des Containers 2.

In dem sich anschließenden Container 3 sind bei dem dargestellten Ausführungsbeispiel eine Reinigungsanlage 22, Drucktanks 23 und ein Filter 24 montiert, wobei diese Reinigungsanlage über entsprechende Anschlüsse mit den Gär- und Lagertanks 20, der Würzepfanne 12 und den anderen von Zeit zu Zeit zu reinigenden Einrichtungen über nicht dargestellte Rohrleitungen verbunden ist.

Auf der Stirnseite der nebeneinander angeordneten Container 0 bis 3 ist ein Container 8 mit Energieversorgungseinrichtungen angeordnet, der beispielsweise Geräte 25 für die Kälteerzeugung, für die Drucklufterzeugung und dergleichen enthält. Je nach Größe der Anlage kann hierfür ein kleiner oder ein großer Container vorgesehen werden. Bei dem dargestellten Ausführungsbeispiel sind bei 26 auch Wasserreservetanks in dem Container 8 angeordnet.

An den Container 8 schließt sich ein Container 9 an, der einen Dampferzeuger 27 enthält.

Mit 10 sind Container bezeichnet die zur Lagerung der für die Bierbereitung erforderlichen Grundstoffe dienen. Während die Behälter 0 bis 9 stationär angeordnet werden, werden die Behälter 10 als Wechselcontainer so angeordnet, daß sie leicht ausgetauscht werden können. Ist einer der Container 10 leer, so wird er abtransportiert und durch einen vollen Container ersetzt.

An den Container 3 schließt sich ein Container 4 an, der eine Faßfülleinrichtung 28, eine Einrichtung 29 für die Faßreinigung und ein Faßlager enthält. An Stelle des Containers 4 kann auch eine andere Abfülleinrichtung vorgesehen werden.

Bei 7 ist ein Sanitär-Container und bei 6 ein Büro-Container dargestellt. Zweckmäßigerweise werden diese mit der Brauereianlage an sich nicht in Verbindung stehenden Einrichtungen ebenfalls in Containern untergebracht.

Um die Kapazität der Anlage zu vergrößern, kann beispielsweise ein Container 2' mit Gär- und Lagertanks 20 an den Container 2 angesetzt werden, wie es in Fig. 3 durch gestrichelte Linien dargestellt ist. Ebenso ist es möglich, durch Ansetzen weiterer Container einzelne Baugruppen zu vergrößern. Dabei kann ein Erweiterungscontainer 5 die gleichen Anlagenteile enthalten wie eine zu vergrößernde Einheit oder auch Anlagenteile, die bei der bestehenden Anlage auf zwei Container verteilt sind. Die Erweiterungscontainer können neben oder über den vorhandenen Containern angeordnet werden.

Zwischen dem Container 1 und dem Container 2 ist eine im einzelnen nicht dargestellte Wärmeisolierungsschicht vorgesehen, die den kalten Bereich der Brauereianlage vom warmen Bereich trennt. Zweckmäßigerweise werden die kühl zu haltenden Container 2, 2' an allen Wandteilen mit einer Isolierschicht versehen.

Die einzelnen Container 0 bis 4 werden zweckmäßigerweise durch Türen miteinander verbunden, die in der Seitenwand der Container ausgeschnitten sind, wie dies in Fig. 1 bei 30 angedeutet ist.

Bei freiliegender Stirnseite der Container können diese auch jeweils über eine in der Stirnseite ausgebildete Tür zugänglich sein. Ebenso ist es möglich, Fensteröffnungen und dergleichen vorzusehen.

Für die zwischen den einzelnen Containern erforderlichen Verbindungsleitungen können die Anschlüsse auch auf der Oberseite der Container angeordnet werden, so daß beim Aufstellen der Container nebeneinander diese miteinander verbunden und danach die Verbindungsleitungen angeschlossen werden können.

Es ist offensichtlich, daß die Erfindung nicht auf das beschriebene Ausführungsbeispiel beschränkt ist. So können bei einer kleineren Anlage die in dem Container 1 angeordneten Einrichtungen auch in dem das Sudwerk aufnehmenden Container 0 montiert werden. Ebenso ist es möglich, die einzelnen Anlagenteile anders in den Container zu gruppieren als dies in Fig. 1 dargestellt ist.

## Patentansprüche

1. Zusammensetzbare Brauereianlage, insbesondere kleintechnische Anlage, mit Wasseraufbereitung, Sudwerk, Gär- und Lagertanks sowie sonstigen für die Bierbereitung erforderlichen Einrichtungen, dadurch gekennzeichnet,
daß Anlagenteile in geschlossenen, jedoch begehbaren Containern fest montiert und verrohrt sind und daß die die Anlagenteile enthaltenden Container aneinander anschließbar sind.

2. Brauereianlage nach Anspruch 1, dadurch gekennzeichnet, daß die einzelnen Container mit vorgefertigten Anschlüssen zur Verbindung der Anlagenteile versehen sind.

3. Brauereianlage nach daß Ansprüchen 1 und 2, dadurch gekennzeichnet, daß der oder die die Gär- und Lagertanks (20) enthaltende Container mit einer Wärme isolierung versehen ist.

4. Brauereianlage nach den Ansprüchen 1 bis 3, dadurch gekennzeichnet, daß die Container horizontal nebeneinander angeordnet sind.

5. Brauereianlage nach den Ansprüchen 1 bis 4, dadurch gekennzeichnet, daß die für die Anlagenteile erforderlichen Energieversorgungseinrichtungen sowie weitere Zubehöreinrichtungen ebenfalls in Containern angeordnet sind.

## Claims

1. Brewery plant capable of being assembled, particularly small capacity plant comprising water conditioning, brew works, fermentation and storage tanks as well as other means required for the production of beer, characterized in that
plant members are fixedly mounted and tubed in closed, however man-sized containers and that the containers containing the plant members are designed to be interconnected.

2. Brewery plant according to claim 1, characterized in that
the single containers are provided with prefabricated joints for connection of the plant members.

3. Brewery plant according to claims 1 and 2, characterized in that
the container or containers containing the fermentation and storage tanks (20) is or are provided with a heat insulation.

4. Brewery plant according to claims 1 to 3, characterized in that
the containers are arranged horizontally side by side.

5. Brewery plant according to claims 1 to 4, characterized in that
the energy supply means required for the plant members as well as further accessories means are arranged in containers, too.

## Revendications

1. Installation de brasserie modulaire, en particulier installation industrielle à petite échelle, comportant un agencement de traitement des eaux un ensemble de brassage, des cuves de fermentation et de sédimentation, ainsi que d'autres agencements nécessaires pour la préparation de la bière, caractérisée en ce que les composants de l'installation sont montés fixement dans des conteneurs fermés mais accessibles et reliés par des tuyaux, et en ce que les conteneurs contenant les composants de l'installation peuvent être raccordés entre eux.

2. Installation modulaire selon la revendication 1, caractérisée en ce que les differents conteneurs comportent des raccords préfabriqués pour le raccordement des composants de l'installation.

3. Installation selon les revendications 1 et 2, caractérisée en ce que le conteneur ou les conteneurs contenant les cuves de fermentation et de sédimentation (20) comportent une couche d'isolation thermique.

4. Installation de brasserie selon les revendications 1 à 3, caractérisée en ce que les conteneurs sont placés dans des positions horizontalement contiguës.

5. Installation de brasserie selon les revendications 1 à 4, caractérisée en ce que les agencements d'alimentation en énergie nécessaires pour les composants de l'installation, ainsi que d'autres agencements accessoires, sont également placés dans des conteneurs.

Fig.1

## Fig.2

## Fig. 3